# EUROPEAN PATENT APPLICATION

(11) **EP 4 099 560 A1**
(43) Date of publication of application: **07.12.2022**
(21) Application number: 20916818.6
(22) Date of filing: 23.12.2020
(51) Int. Cl.: H02P 25/064, H02K 41/03

(54) **LINEAR MOTOR SYSTEM**

(30) Priority: 30.01.2020 JP 2020013149
(71) Applicant: Panasonic Intellectual Property Management Co., Ltd., Osaka-shi, Osaka 540-6207 (JP)
(72) Inventor: MURAKAMI, Kenta, Osaka-shi, Osaka 540-6207 (JP); KAWAKAMI, Renya, Osaka-shi, Osaka 540-6207 (JP); TAZAWA, Toru, Osaka-shi, Osaka 540-6207 (JP); NONOGAKI, Yusuke, Osaka-shi, Osaka 540-6207 (JP)
(74) Representative: Grünecker Patent- und Rechtsanwälte PartG mbB
(86) International application number: PCT/JP2020/048206
(87) International publication number: WO 2021/153117

(57) **Abstract**

A linear motor system (10) includes: a stator (16) including first to tenth coils (20a) to (20j); a mover (18) including a permanent magnet (24); a switcher (36) that switches one or more power supply target coils that serve as power supply targets; and a control device (14) that supplies power to the one or more power supply target coils by using total mass Mₐₗₗ calculated based on a mass of the permanent magnet (24). The control device (14) includes: an acquirer (40) that acquires total number n of the one or more power supply target coils; a speed control unit (48) that calculates post-division total mass Mₐₗₗ/n by dividing total mass Mₐₗₗ by total number n of the one or more power supply target coils, and generates a torque instruction by using post-division total mass Mₐₗₗ/n; and a current control unit (50) that supplies power to the one or more power supply target coils based on the torque instruction generated by the speed control unit (48).

## Description

### [Technical Field]

The present invention relates to a moving magnet type linear motor system.

### [Background Art]

A moving magnet type linear motor system in which a permanent magnet is moved relative to coils is conventionally known.

For example, Patent Literature (PTL) 1 discloses a linear motor system including: a stator in which a plurality of armature winding units are provided in a line; a mover that includes a permanent magnet and is provided opposite to the stator; and a control device that drives the mover by sequentially supplying power to armature winding units that face the mover out of the plurality of armature winding units, as power supply targets. The control device has a function of, when switching the armature winding units that serve as the power supply targets, performing power supply control switching compensation for armature winding units that serve as switch targets to which switching is performed. Specifically, the control device includes a plurality of second control devices that are connected to the plurality of armature winding units, and is configured to set speed integral values of the second control devices that correspond to the armature winding units selected as the power supply targets immediately before the switching, as the speed integral values of the second control devices of the switch targets.

### [Citation List]

### [Patent Literature]

[PTL 1]
Japanese Unexamined Patent Application Publication No. 2015-33240

### [Summary of Invention]

### [Technical Problem]

However, in the linear motor system disclosed in PTL 1, when the total number of armature winding units that serve as power supply targets varies before and after switching, the speed integral values cannot be set appropriately. Accordingly, when the armature winding units that serve as the power supply targets are switched, a thrust applied to the mover sharply varies, and thus it is not possible to reduce the switching shock. As a result, it is not possible to achieve a transport system in which the total number of armature winding units that serve as power supply targets can be flexibly changed.

Accordingly, it is an object of the present invention to provide a linear motor system that can reduce the switching shock.

### [Solution to Problem]

A linear motor system according to one aspect of the present disclosure includes: a stator including a plurality of coils that are arranged in a line; a mover including a permanent magnet disposed opposite to the plurality of coils; a switcher that performs: (i) selecting, from among the plurality of coils, one or more coils each including a region that extends across opposite ends in an arrangement direction and faces the permanent magnet as one or more power supply target coils that serve as power supply targets; and (ii) switching the one or more power supply target coils in response to a movement of the permanent magnet; and a control device that supplies power to the one or more power supply target coils by using a total mass calculated based on a mass of the permanent magnet, wherein the control device includes: an acquirer that acquires a total number of the one or more power supply target coils; a speed control unit that calculates a post-division total mass by dividing the total mass by the total number of the one or more power supply target coils, and generates a torque instruction by using the post-division total mass; and a current control unit that supplies power to the one or more power supply target coils based on the torque instruction generated by the speed control unit.

### [Advantageous Effects of Invention]

With the linear motor system according to the aspect of the present disclosure, it is possible to reduce the switching shock.

### [Brief Description of Drawings]

[FIG. 1A]

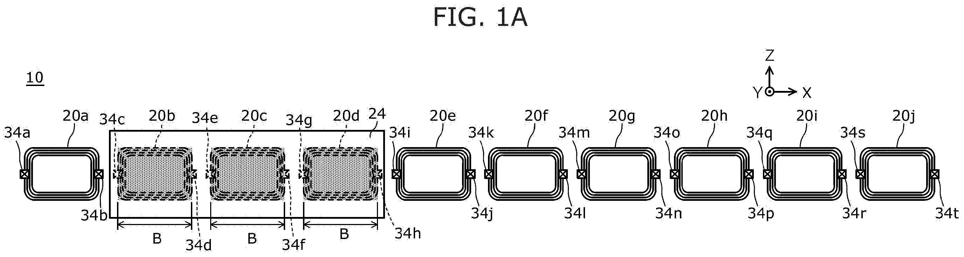

   FIG. 1A is a diagram showing a configuration of a linear motor system according to Embodiment 1, as viewed from a transverse direction.
[FIG. 1B]

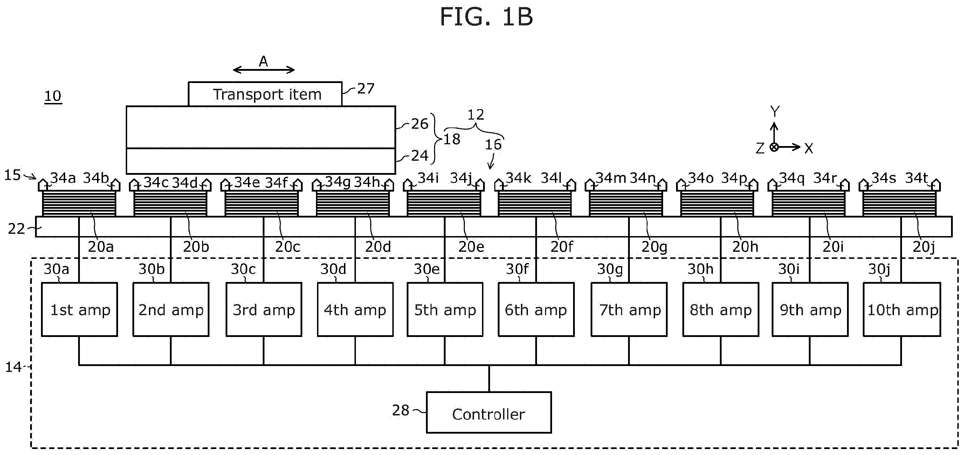

   FIG. 1B is a diagram showing the configuration of the linear motor system shown in FIG. 1A, as viewed from a direction that is orthogonal to a transverse direction and is also orthogonal to an arrangement direction.
[FIG. 2]

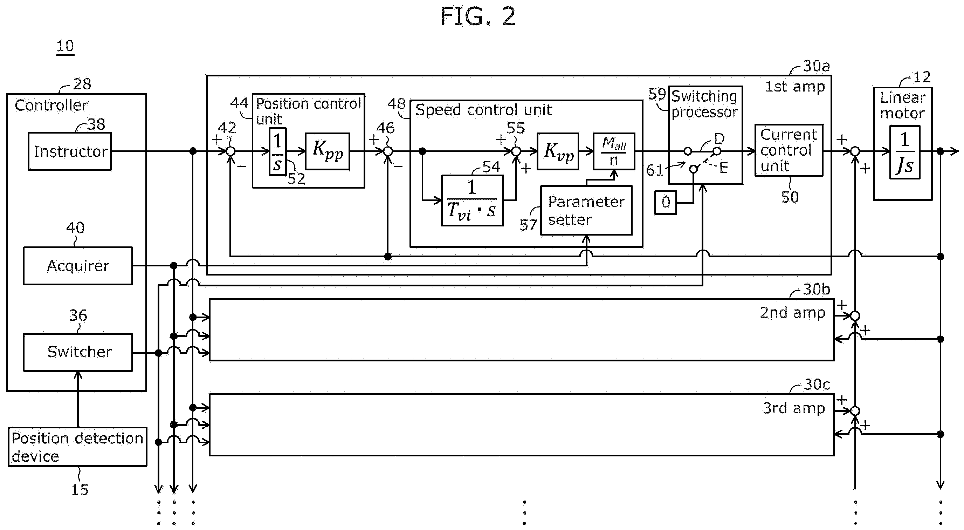

   FIG. 2 is a block diagram showing a functional configuration of the linear motor system shown in FIG. 1A.
[FIG. 3]

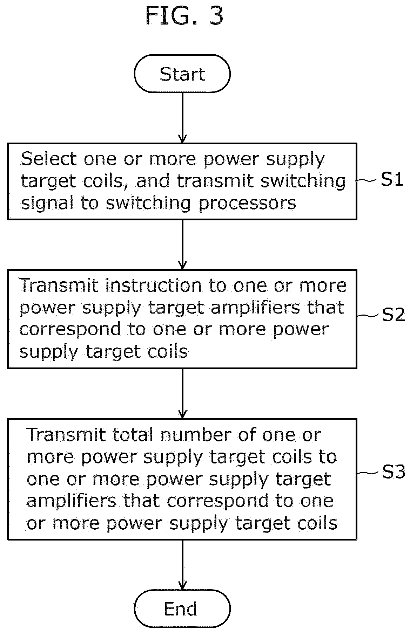

   FIG. 3 is a flow diagram showing an example of an operation performed by a controller included in the linear motor system shown in FIG. 1A.
[FIG. 4]

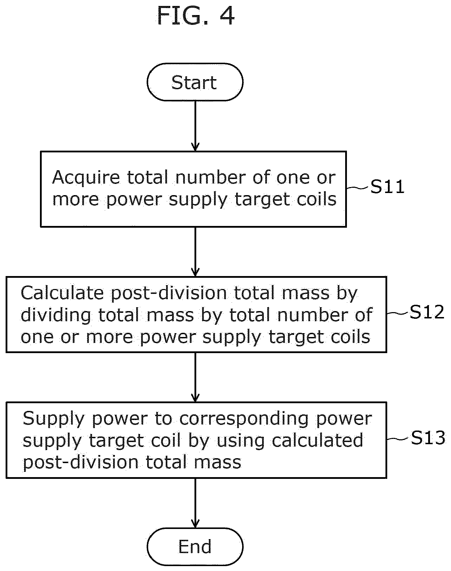

   FIG. 4 is a flow diagram showing an example of an operation performed by a power supply target amplifier included in the linear motor system shown in FIG. 1A.
[FIG. 5]

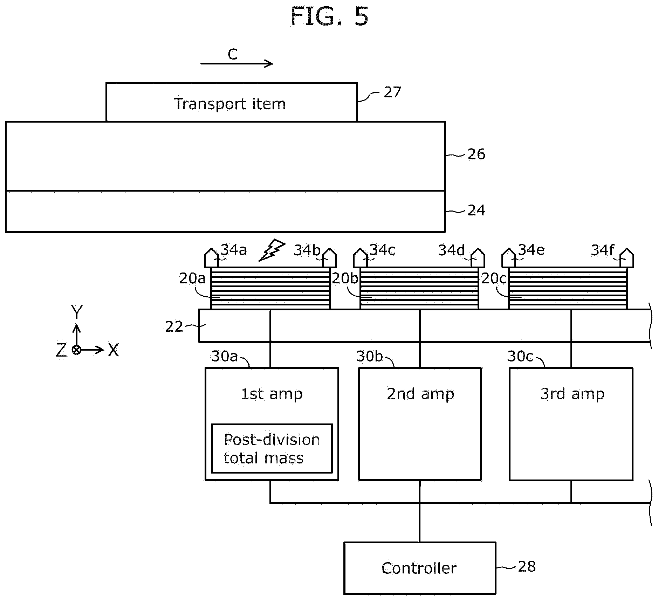

   FIG. 5 is an illustrative diagram illustrating an example of an operation performed by the linear motor system shown in FIG. 1A, showing a state when the number of power supply target coils is one.
[FIG. 6]

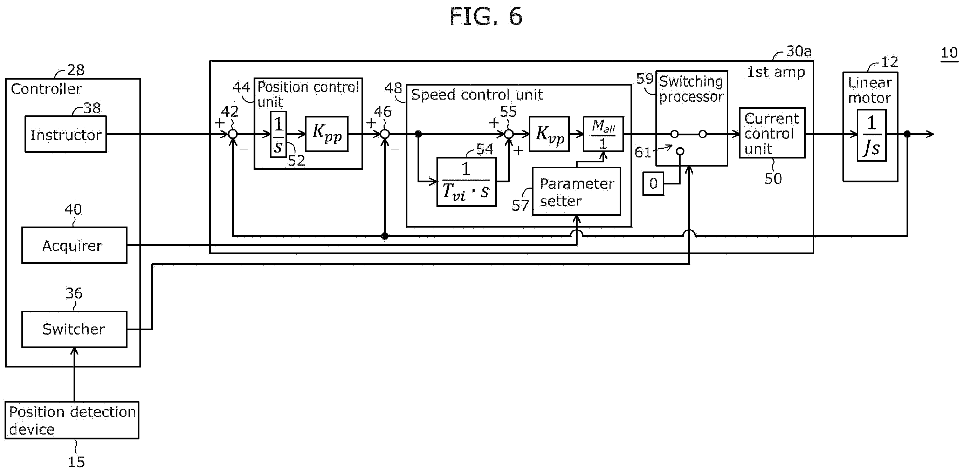

   FIG. 6 is a block diagram showing a functional configuration of the linear motor system in the state shown in FIG. 5.
[FIG. 7]

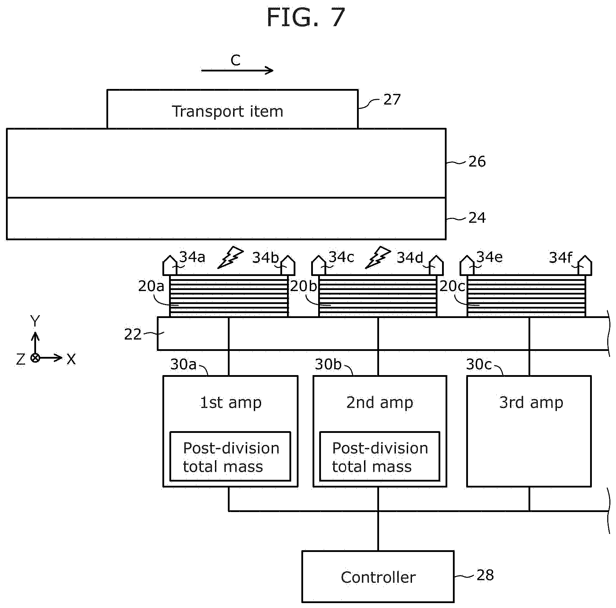

   FIG. 7 is an illustrative diagram illustrating an example of an operation performed by the linear motor system shown in FIG. 1A, showing a state when the number of power supply target coils is two.
[FIG. 8]

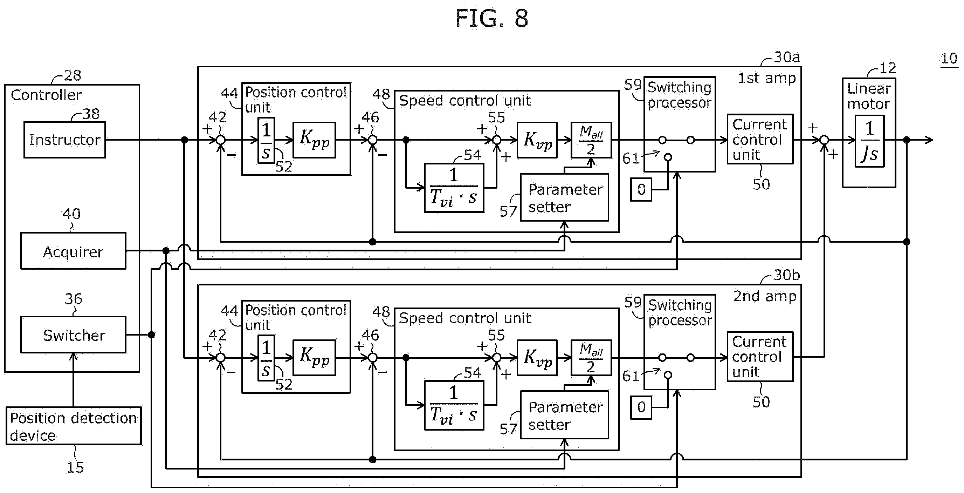

   FIG. 8 is a block diagram showing a functional configuration of the linear motor system in the state shown in FIG. 7.
[FIG. 9]

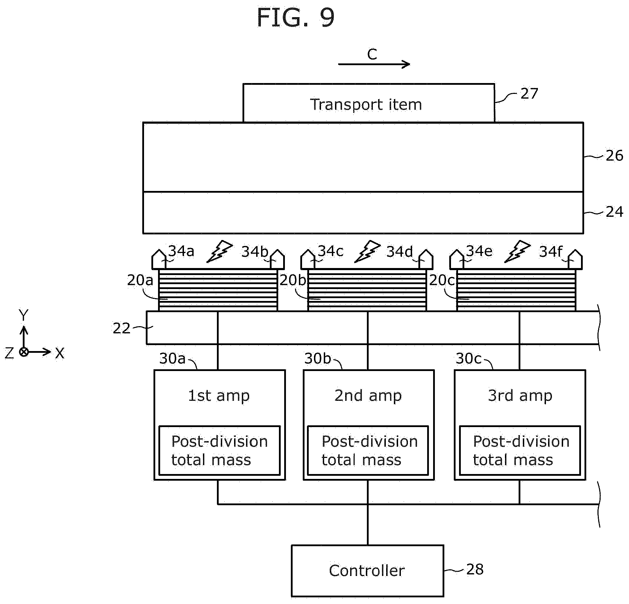

   FIG. 9 is an illustrative diagram illustrating an example of an operation performed by the linear motor system shown in FIG. 1A, showing a state when the number of power supply target coils is three.
[FIG. 10]

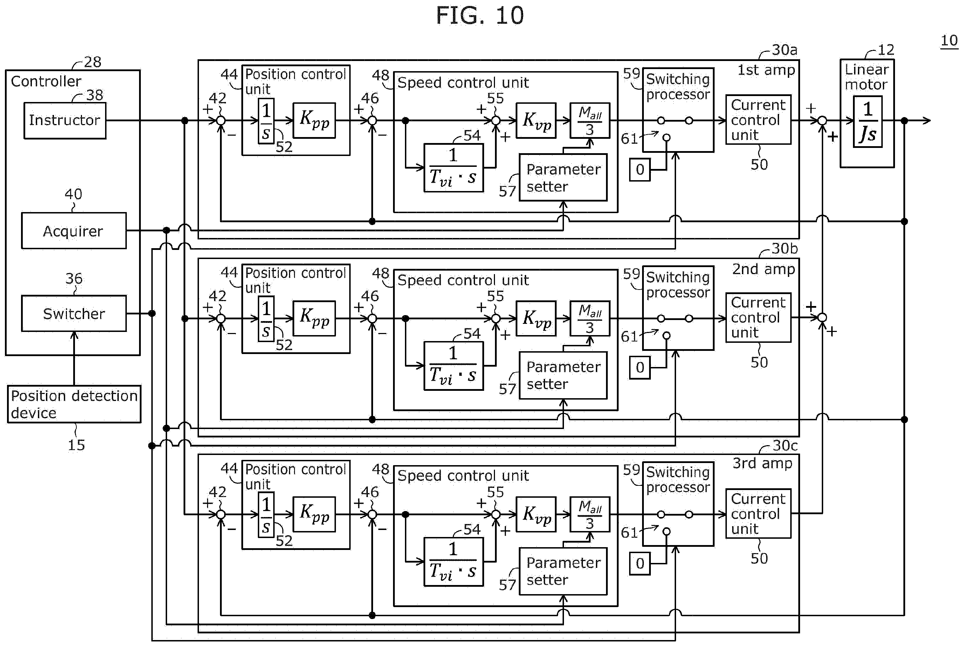

   FIG. 10 is a block diagram showing a functional configuration of the linear motor system in the state shown in FIG. 9.
[FIG. 11]

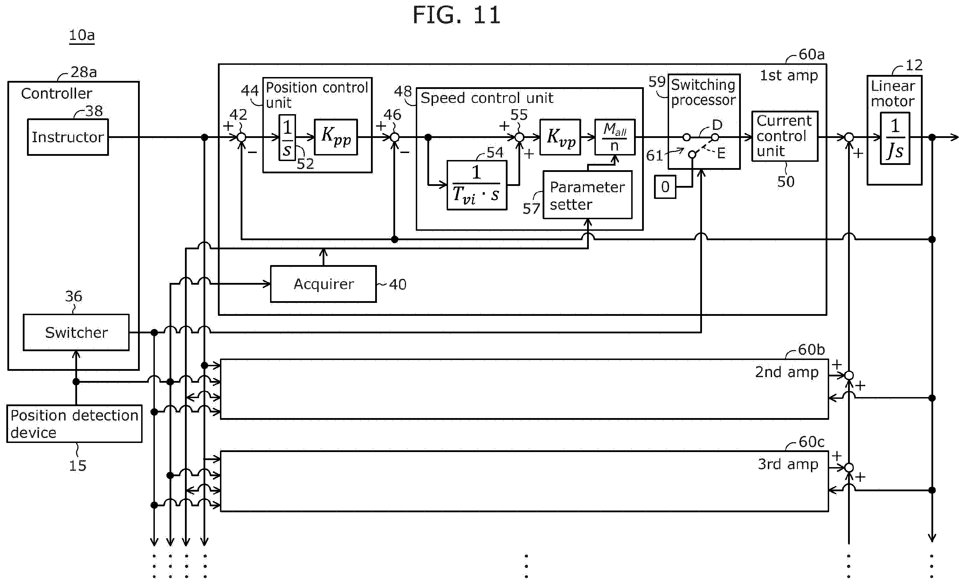

   FIG. 11 is a block diagram showing a functional configuration of a linear motor system according to Embodiment 2.

### [Description of Embodiments]

### (Background for Obtaining One Aspect of the Present Disclosure)

As described above, in the linear motor system disclosed in PTL 1, when the total number of armature winding units that serve as power supply targets varies before and after switching, it is not possible to reduce the switching shock.

For this reason, the inventors conducted in-depth studies and experiments to reduce the switching shock. As a result, the inventors found that it is possible to suppress sharp variation in thrust applied to the mover at the time of switching, and reduce the switching shock by calculating a post-division total mass by dividing a total mass calculated based on a mass of a permanent magnet, a mass of a carrier, and a mass of a transport item by a total number of one or more power supply target coils, and supplying power to the one or more power supply target coils by using the calculated post-division total mass.

The inventors further conducted in-depth studies and experiments based on the above findings, and arrived at a linear motor system according to one aspect of the present disclosure described below.

A linear motor system according to one aspect of the present disclosure includes: a stator including a plurality of coils that are arranged in a line; a mover including a permanent magnet disposed opposite to the plurality of coils; a switcher that performs: (i) selecting, from among the plurality of coils, one or more coils each including a region that extends across opposite ends in an arrangement direction and faces the permanent magnet as one or more power supply target coils that serve as power supply targets; and (ii) switching the one or more power supply target coils in response to a movement of the permanent magnet; and a control device that supplies power to the one or more power supply target coils by using a total mass calculated based on a mass of the permanent magnet, wherein the control device includes: an acquirer that acquires a total number of the one or more power supply target coils; a speed control unit that calculates a post-division total mass by dividing the total mass by the total number of the one or more power supply target coils, and generates a torque instruction by using the post-division total mass; and a current control unit that supplies power to the one or more power supply target coils based on the torque instruction generated by the speed control unit.

According to the linear motor system configured as described above, the speed control unit calculates the post-division total mass by dividing the total mass by the total number of one or more power supply target coils. Then, the speed control unit generates the torque instruction by using the calculated post-division total mass, and the current control unit supplies power to the one or more power supply target coils based on the generated torque instruction. Accordingly, even when the total number of one or more power supply target coils varies before and after switching, it is possible to supply power to the one or more power supply target coils immediately after switching by equally dividing the total mass. As a result, it is possible to suppress sharp variation in thrust applied to the mover at the time of switching, and thus reduce the switching shock that occurs when the one or more power supply target coils are switched.

Also, the control device may include a plurality of control units that are provided in one-to-one correspondence with the plurality of coils, each of the plurality of control units may include the speed control unit and the current control unit, the acquirer may transmit the total number of the one or more power supply target coils to one or more power supply target control units that are one or more control units, out of the plurality of control units, that correspond to the one or more power supply target coils, and the speed control unit of each of the one or more power supply target control units may generate the torque instruction by using the post-division total mass, and the current control unit of each of the one or more power supply target control units may supply power to a corresponding one of the one or more power supply target coils based on the torque instruction.

Also, the control device may further include a superordinate control unit capable of communicating with the plurality of control units, and the superordinate control unit may include the acquirer.

Also, the plurality of control units may be capable of communicating with each other, and each of the plurality of control units may include the acquirer.

Also, the linear motor system may further include a plurality of position detectors provided at opposite ends of each of the plurality of coils in the arrangement direction. In each of the plurality of coils, when one of the position detectors that is provided on a forward side in a moving direction of the permanent magnet in the arrangement direction detects a leading end of the permanent magnet, the switcher may select the coil on which the position detector is disposed as one of the one or more power supply target coils, and when another one of the position detectors that is provided on a rearward side in the moving direction of the permanent magnet in the arrangement direction detects a trailing end of the permanent magnet, the switcher may not select the coil on which the position detector is disposed as the one of the one or more power supply target coils.

Also, the total mass may be a sum of a mass of the permanent magnet, a mass of a transport item, and a mass of a carrier on which the transport item is placed and that is attached to the permanent mag net.

Hereinafter, a specific example of a linear motor system according to one aspect of the present disclosure will be described with reference to the drawings. The embodiments described below show generic or specific examples. The numerical values, shapes, materials, structural elements, the arrangement and connection of the structural elements, and the like shown in the following embodiments are merely examples, and therefore are not intended to limit the scope of the present disclosure.

In addition, the diagrams are schematic representations, and thus are not necessarily true to scale. Also, in the diagrams, structural elements that are substantially the same are given the same reference numerals, and a redundant description may be omitted or simplified.

Also, in the diagrams that are referred to in the description of the embodiments given below, a coordinate system may be shown. The X axis direction in the coordinate system is an arrangement direction in which a plurality of coils are arranged. The Y axis direction in the coordinate system is a direction that is orthogonal to the X axis direction, and is a transverse direction that is orthogonal to the arrangement direction. Also, the Z axis direction in the coordinate system is a direction that is orthogonal to the X axis direction, and is also orthogonal to the Y axis direction.

### [Embodiment 1]

Hereinafter, linear motor system 10 according to Embodiment 1 will be described with reference to the drawings.

FIG. 1A is a diagram showing a configuration of linear motor system 10 according to Embodiment 1, as viewed from the transverse direction. FIG. 1B is a diagram showing the configuration of linear motor system 10 shown in FIG. 1A, as viewed from a direction that is orthogonal to the transverse direction and is also orthogonal to the arrangement direction. In FIG. 1A, in order to avoid complex drawings, base 22, carrier 26, and the like are not illustrated. The configuration of linear motor system 10 according to Embodiment 1 will be described with reference to FIGS. 1A and 1B.

As shown in FIGS. 1A and 1B, linear motor system 10 includes linear motor 12, control device 14, and position detection device 15.

Linear motor 12 includes stator 16 and mover 18 that is movable relative to stator 16. Linear motor 12 is a moving magnet type linear motor in which permanent magnet 24 (which will be described later) moves relative to first to tenth coils 20a to 20j (which will be described later).

Stator 16 includes first to tenth coils 20a to 20j and base 22 to which first to tenth coils 20a to 20j are fixed. As described above, stator 16 includes a plurality of (ten in the present embodiment) coils. Stator 16 may include eleven or more coils, or nine or less coils.

First to tenth coils 20a to 20j are arranged in a line. First to tenth coils 20a to 20j are linearly arranged, but may be arranged in a curve. Also, first to tenth coils 20a to 20j are disposed at a regular interval, but are not necessarily disposed at a regular interval. As shown in FIG. 1A, each of first to tenth coils 20a to 20j is wound in the transverse direction (Y axis direction) that is orthogonal to the arrangement direction (X axis direction) in which first to tenth coils 20a to 20j are arranged, and is disposed so as to be open in the transverse direction.

Mover 18 includes permanent magnet 24 and carrier 26 that is attached to permanent magnet 24.

Permanent magnet 24 is disposed opposite to first to tenth coils 20a to 20j in the transverse direction. Specifically, permanent magnet 24 is disposed opposite to a few of first to tenth coils 20a to 20j in the transverse direction. Permanent magnet 24 is movable along first to tenth coils 20a to 20j in the arrangement direction (see arrow A shown in FIG. 1B). Permanent magnet 24 has magnetic poles (not shown) aligned in the arrangement direction. For example, permanent magnet 24 has a plurality of N poles and a plurality of S poles, with the N poles and the S pole being alternately provided in the arrangement direction. Permanent magnet 24 is formed to have a size that entirely overlaps three adjacent coils out of first to tenth coils 20a to 20j when viewed from the transverse direction. In the state shown in FIGS. 1A and 1B, permanent magnet 24 is disposed to entirely overlap three adjacent coils, namely, second coil 20b, third coil 20c, and fourth coil 20d, out of first to tenth coils 20a to 20j when viewed from the transverse direction. In other words, in the state shown in FIGS. 1A and 1B, a region extending across opposite ends (see arrows B and dotted regions shown in FIG. 1A) of each of second coil 20b, third coil 20c, and fourth coil 20d in the arrangement direction when viewed from the transverse direction is disposed to face permanent magnet 24, and overlaps permanent magnet 24 when viewed from the transverse direction. The size of permanent magnet 24 is not limited thereto, and for example, permanent magnet 24 may be formed to have a size that entirely overlaps two adjacent coils out of first to tenth coils 20a to 20j when viewed from the transverse direction, or a size that entirely overlaps four or more adjacent coils out of first to tenth coils 20a to 20j when viewed from the transverse direction. Also, permanent magnet 24 may be formed in a substantially U shape that clamps first to tenth coils 20a to 20j in the transverse direction. Alternatively, permanent magnet 24 may be formed in a substantially U shape that clamps first to tenth coils 20a to 20j in a direction (Z axis direction) that is orthogonal to the arrangement direction and is also orthogonal to the transverse direction.

Any transport item 27 can be placed (loaded) on carrier 26.

Control device 14 is a device that controls linear motor 12. Control device 14 causes mover 18 to move to a desired position relative to stator 16 by supplying power to one or more power supply target coils that serve as power supply targets out of first to tenth coils 20a to 20j. Control device 14 includes controller 28 and first to tenth amplifiers 30a to 30j that are connected to controller 28 and first to tenth coils 20a to 20j. As described above, control device 14 includes a plurality of (ten in the present embodiment) amplifiers. In the present embodiment, controller 28 corresponds to the superordinate control unit, and first to tenth amplifiers 30a to 30j correspond to the plurality of control units.

Controller 28 recognizes the position of permanent magnet 24 based on information transmitted from position detection device 15, and selects one or more power supply target coils according to the position of permanent magnet 24. Controller 28 is capable of communicating with first to tenth amplifiers 30a to 30j, and transmits an instruction such as a speed instruction or a position instruction to one or more power supply target amplifiers that are amplifiers out of first to tenth amplifiers 30a to 30j that correspond to the selected one or more power supply target coils. In the state shown in FIGS. 1A and 1B, second coil 20b, third coil 20c, and fourth coil 20d serve as the power supply target coils, and second amplifier 30b, third amplifier 30c, and fourth amplifier 30d serve as the power supply target amplifiers. In the present embodiment, the power supply target amplifiers correspond to the power supply target control units.

First to tenth amplifiers 30a to 30j are provided in one-to-one correspondence with first to tenth coils 20a to 20j, respectively. Specifically, first amplifier 30a is provided in correspondence with first coil 20a, and second amplifier 30b is provided in correspondence with second coil 20b. The same applies to third to tenth amplifiers 30c to 30j. Each of the one or more power supply target amplifiers that are amplifiers out of first to tenth amplifiers 30a to 30j that correspond to the selected one or more power supply target coils supplies power to the corresponding power supply target coil by using total mass Mₐₗₗ calculated by using the mass of permanent magnet 24, the mass of carrier 26, and the mass of transport item 27. Here, total mass Mₐₗₗ is the sum of the mass of mover 18 and the mass of transport item 27. That is, here, total mass Mₐₗₗ is the sum of the mass of permanent magnet 24, the mass of carrier 26, and the mass of transport item 27. In a state in which transport item 27 is not placed (loaded) on mover 18, total mass Mₐₗₗ is equal to the mass of mover 18. In the state shown in FIGS. 1A and 1B, second amplifier 30b supplies power to second coil 20b by using total mass Mₐₗₗ, third amplifier 30c supplies power to third coil 20c by using total mass Mₐₗₗ, and fourth amplifier 30d supplies power to fourth coil 20d by using total mass Mₐₗₗ.

When power is supplied to each power supply target coil, the power supply target coil is magnetized, and permanent magnet 24 is pulled or pushed by the power supply target coil, which causes mover 18 to move. The magnetic poles of each power supply target coil can be changed by changing the flow direction of electric current supplied to the power supply target coil. For example, if electric current flows clockwise when viewed from mover 18 side in the transverse direction, mover 18 side of the power supply target coil in the transverse direction serves as the S pole, and the side of the power supply target coil opposite to mover 18 side serves as the N pole. Conversely, if electric current flows counterclockwise when viewed from mover 18 side in the transverse direction, mover 18 side of the power supply target coil serves as the N pole, and the side of the power supply target coil opposite to mover 18 side serves as the S pole. Each power supply target amplifier determines the flow direction of electric current supplied to the power supply target coil according to the positions of the magnetic poles (the N pole and the S pole) of permanent magnet 24.

Controller 28 sequentially switches each power supply target coil and supplies power to the power supply target coil in response to a movement of permanent magnet 24, and causes mover 18 to move to a desired position.

Position detection device 15 is a device that detects the position of permanent magnet 24. Position detection device 15 includes first to twentieth position sensors 34a to 34t that are disposed at opposite ends of each of first to tenth coils 20a to 20j in the arrangement direction. As described above, position detection device 15 includes a plurality of (twenty in the present embodiment) position sensors. First position sensor 34a and second position sensor 34b are disposed at opposite ends of first coil 20a in the arrangement direction, third position sensor 34c and fourth position sensor 34d are disposed at opposite ends of second coil 20b in the arrangement direction, fifth position sensor 34e and sixth position sensor 34f are disposed at opposite ends of third coil 20c in the arrangement direction, seventh position sensor 34g and eighth position sensor 34h are disposed at opposite ends of fourth coil 20d in the arrangement direction, and ninth position sensor 34i and tenth position sensor 34j are disposed at opposite ends of fifth coil 20e in the arrangement direction. Eleventh position sensor 34k and twelfth position sensor 341 are disposed at opposite ends of sixth coil 20f in the arrangement direction, thirteenth position sensor 34m and fourteenth position sensor 34n are disposed at opposite ends of seventh coil 20g in the arrangement direction, fifteenth position sensor 34o and sixteenth position sensor 34p are disposed at opposite ends of eighth coil 20h in the arrangement direction, seventeenth position sensor 34q and eighteenth position sensor 34r are disposed at opposite ends of ninth coil 20i in the arrangement direction, and nineteenth position sensor 34s and twentieth position sensor 34t are disposed at opposite ends of tenth coil 20j in the arrangement direction. In the present embodiment, first to twentieth position sensors 34a to 34t correspond to the plurality of position detectors.

Each of first to twentieth position sensors 34a to 34t detects permanent magnet 24 that faces the position sensor in the transverse direction. In the state shown in FIGS. 1A and 1B, first position sensor 34a and second position sensor 34b do not face permanent magnet 24 in the transverse direction, and thus transmit a signal indicating that they have not detected permanent magnet 24 to controller 28 and first to tenth amplifiers 30a to 30j. As a result, controller 28 and first to tenth amplifiers 30a to 30j recognize that the region extending across opposite ends of first coil 20a in the arrangement direction when viewed from the transverse direction does not face permanent magnet 24 in the transverse direction. In other words, as a result, controller 28 and first to tenth amplifiers 30a to 30j recognize that the entirety of first coil 20a does not overlap permanent magnet 24 when viewed from the transverse direction. The same applies to ninth to twentieth position sensors 34i to 34t. In contrast, third position sensor 34c and fourth position sensor 34d face permanent magnet 24 in the transverse direction, and thus transmit a signal indicating that they have detected permanent magnet 24 to controller 28 and first to tenth amplifiers 30a to 30j. As a result, controller 28 and first to tenth amplifiers 30a to 30j recognize that the region extending across opposite ends of second coil 20b in the arrangement direction when viewed from the transverse direction faces permanent magnet 24, and overlaps permanent magnet 24 in the transverse direction. In other words, as a result, controller 28 and first to tenth amplifiers 30a to 30j recognize that the entirety of second coil 20b overlaps permanent magnet 24 when viewed from the transverse direction. The same applies to fifth to eighth position sensors 34e to 34h.

Also, each of first to twentieth position sensors 34a to 34t detects a leading end and a trailing end of permanent magnet 24 in a movement direction in which permanent magnet 24 moves. For example, when first position sensor 34a faces the leading end of permanent magnet 24 in the movement direction in the transverse direction, first position sensor 34a transmits a signal indicating that the leading end of permanent magnet 24 has been detected to controller 28 and first to tenth amplifiers 30a to 30j. For example, first position sensor 34a detects the leading end of permanent magnet 24 by detecting a mark or the like that is attached to the leading end of permanent magnet 24. Likewise, when first position sensor 34a faces the trailing end of permanent magnet 24 in the movement direction in the transverse direction, first position sensor 34a transmits a signal indicating that the trailing end of permanent magnet 24 has been detected to controller 28 and first to tenth amplifiers 30a to 30j. For example, first position sensor 34a detects the trailing end of permanent magnet 24 by detecting a mark or the like that is attached to the trailing end of permanent magnet 24. The same applies to second to twentieth position sensors 34b to 34t.

FIG. 2 is a block diagram showing a functional configuration of linear motor system 10 shown in FIG. 1A. The functional configuration of linear motor system 10 shown in FIG. 1A will be described with reference to FIG. 2.

Controller 28 includes switcher 36, instructor 38, and acquirer 40.

Switcher 36 is connected to position detection device 15, and selects one or more power supply target coils based on information transmitted from position detection device 15, and transmits, to switching processors 59 (which will be described later) that are included in first to tenth amplifiers 30a to 30j, a switching signal for determining whether the one or more power supply target coils are power supply targets. Specifically, switcher 36 selects, as one or more power supply target coils, one or more coils from among first to tenth coils 20a to 20j, the one or more coils being one or more coils whose region extending across opposite ends in the arrangement direction when viewed from the transverse direction entirely faces permanent magnet 24 in the transverse direction. Furthermore, switcher 36 transmits a switching signal that determines that the selected one or more coils are power supply targets to switching processor 59 of one or more power supply target amplifiers. In other words, switcher 36 selects, as one or more power supply target coils, one or more coils from among first to tenth coils 20a to 20j, the one or more coils being one or more coils entirely overlapping permanent magnet 24 when viewed from the transverse direction. Furthermore, switcher 36 transmits a switching signal that determines that the selected one or more coils are power supply targets to switching processor 59 of one or more power supply target amplifiers.

For example, when the position sensor on the forward side in the moving direction of permanent magnet 24 in the arrangement direction in each of first to tenth coils 20a to 20j detects the leading end of permanent magnet 24, switcher 36 selects a coil on which the position sensor is disposed as a power supply target coil. Furthermore, switcher 36 transmits a switching signal that determines that the selected coil is a power supply target to switching processor 59 of the power supply target amplifier. For example, as shown in FIGS. 1A and 1B, in the case where the moving direction of permanent magnet 24 is a direction extending from first coil 20a side toward tenth coil 20j side (plus X axis direction), when eighth position sensor 34h on the forward side in the moving direction of permanent magnet 24 detects the leading end of permanent magnet 24, switcher 36 selects fourth coil 20d on which eighth position sensor 34h is disposed as a power supply target coil. Furthermore, switcher 36 transmits a switching signal that determines that the selected coil is a power supply target to switching processor 59 of fourth amplifier 30d. The same applies to first to third coils 20a to 20c and fifth to tenth coils 20e to 20j.

Also, for example, when the position sensor on the rearward side in the moving direction of permanent magnet 24 in the arrangement direction in each of first to tenth coils 20a to 20j detects the trailing end of permanent magnet 24, switcher 36 does not select a coil on which the position sensor is disposed as a power supply target coil. Furthermore, switcher 36 transmits a switching signal that determines that the selected coil is not a power supply target to switching processor 59 of an amplifier that corresponds to the selected coil. For example, as shown in FIGS. 1A and 1B, in the case where the moving direction of permanent magnet 24 is a direction extending from first coil 20a side toward tenth coil 20j side (plus X axis direction), when third position sensor 34c on the rearward side in the moving direction of permanent magnet 24 detects the trailing end of permanent magnet 24, switcher 36 does not select second coil 20b on which third position sensor 34c is disposed as a power supply target coil. Furthermore, switcher 36 transmits a switching signal that determines that the selected coil is not a power supply target to switching processor 59 of second amplifier 30b. The same applies to first coil 20a and third to tenth coils 20c to 20j.

In the state shown in FIGS. 1A and 1B, switcher 36 selects second coil 20b, third coil 20c, and fourth coil 20d as power supply target coils. Furthermore, switcher 36 transmits a switching signal that determines that the selected coils are power supply targets to switching processors 59 of second amplifier 30b, third amplifier 30c, and fourth amplifier 30d. Also, when permanent magnet 24 moves as a result of power being supply to one or more power supply target coils, switcher 36 switches the one or more power supply target coils according to the position of permanent magnet 24.

Instructor 38 is connected to first to tenth amplifiers 30a to 30j, and transmits an instruction such as a speed instruction or a position instruction to one or more power supply target amplifiers that correspond to the one or more power supply target coils selected by switcher 36 from among first to tenth amplifiers 30a to 30j. In the present embodiment, instructor 38 transmits a speed instruction. For example, in the case where first coil 20a is selected as a power supply target coil, an amplifier that corresponds to the selected power supply target coil is first amplifier 30a, and thus instructor 38 transmits an instruction to first amplifier 30a. Also, in the case where second coil 20b is selected as a power supply target coil, an amplifier that corresponds to the selected power supply target coil is second amplifier 30b, and thus instructor 38 transmits an instruction to second amplifier 30b. The same applies to third to tenth amplifiers 30c to 30j. In the state shown in FIGS. 1A and 1B, second to fourth amplifiers 30b to 30d are selected as power supply target amplifiers, and thus instructor 38 transmits an instruction to second to fourth amplifiers 30b to 30d.

Acquirer 40 acquires the total number of one or more power supply target coils selected by switcher 36. Also, acquirer 40 transmits the acquired total number of one or more power supply target coils to parameter setter 57 (which will be described later) of one or more power supply target amplifiers out of first to tenth amplifiers 30a to 30j. For example, when switcher 36 switches one or more power supply target coils, acquirer 40 transmits the total number of one or more power supply target coils immediately after the switching to parameter setter 57 of the one or more power supply target amplifiers immediately after the switching. For example, when switcher 36 selects first coil 20a as a power supply target coil, acquirer 40 transmits information indicating that the total number of one or more power supply target coils is one to parameter setter 57 of first amplifier 30a corresponding to first coil 20a. Also, for example, when switcher 36 selects first coil 20a and second coil 20b as power supply target coils, acquirer 40 transmits information indicating that the total number of one or more power supply target coils is two to parameter setter 57 of first amplifier 30a corresponding to first coil 20a and parameter setter 57 of second amplifier 30b corresponding to second coil 20b.

First amplifier 30a includes deviation calculation unit 42, position control unit 44, deviation calculation unit 46, speed control unit 48, current control unit 50, and switching processor 59.

Deviation calculation unit 42 is connected to instructor 38, and receives an instruction, such as a speed instruction or a position instruction, that is transmitted from instructor 38. Also, deviation calculation unit 42 acquires the actual speed of permanent magnet 24 detected by a linear scale (not shown), an encoder (not shown), or the like, or in other words, the actual speed of mover 18. For example, in the case where deviation calculation unit 42 receives a speed instruction, deviation calculation unit 42 calculates a speed deviation that is the difference between an instructed speed of permanent magnet 24 indicated by the speed instruction and the actual speed of permanent magnet 24. Also, in the case where deviation calculation unit 42 receives a position instruction, deviation calculation unit 42 calculates a speed deviation that is the difference between an instructed speed of permanent magnet 24 calculated based on the position instruction and the actual speed of permanent magnet 24. The position instruction may be, for example, an instruction that causes mover 18 to move to a predetermined position in a predetermined period of time, and the instructed speed can be calculated based on the predetermined period of time and the distance to the predetermined position.

Position control unit 44 includes integrator 52. Position control unit 44 integrates the speed deviation calculated by deviation calculation unit 42 by using integrator 52. Also, position control unit 44 generates a speed instruction by multiplying the value calculated by integrator 52 by position loop gain Kₚₚ.

Deviation calculation unit 46 is connected to position control unit 44, and receives the speed instruction transmitted from position control unit 44. Also, deviation calculation unit 46 acquires the actual speed of permanent magnet 24. Deviation calculation unit 46 calculates a speed deviation that is the difference between an instructed speed of permanent magnet 24 indicated by the speed instruction and the actual speed of permanent magnet 24.

Speed control unit 48 includes integrator 54, adder 55, and parameter setter 57.

Integrator 54 integrates the speed deviation calculated by deviation calculation unit 46 and divides the speed deviation by integral gain Tᵥᵢ.

Adder 55 adds the speed deviation calculated by deviation calculation unit 46 and the value calculated by integrator 54. The value calculated by adder 55 is multiplied by proportional gain Kᵥₚ, and further multiplied by post-division total mass Mₐₗₗ/n. Kᵥₚ is used to set, for example, the response frequency of speed control. A description of post-division total mass Mₐₗₗ/n will be given later. A value obtained by multiplication by post-division total mass Mₐₗₗ/n is input to current control unit 50 as a torque instruction. In this way, speed control unit 48 generates a torque instruction by using post-division total mass Mₐₗₗ/n. For example, the torque instruction is input to current control unit 50 via a torque filter (not shown). By using the torque filter, the shock that occurs when switching the power supply target coils can be reduced.

Parameter setter 57 is connected to acquirer 40, and receives the total number of one or more power supply target coils transmitted from acquirer 40. Parameter setter 57 sets a parameter according to the received total number of one or more power supply target coils, and calculates post-division total mass Mₐₗₗ/n. Specifically, parameter setter 57 calculates post-division total mass Mₐₗₗ/n by dividing total mass Mₐₗₗ by total number n of one or more power supply target coils. As described above, post-division total mass Mₐₗₗ/n is a value obtained by dividing total mass Mₐₗₗ by total number n of one or more power supply target coils. Total mass Mₐₗₗ has been calculated and input to first to tenth amplifiers 30a to 30j in advance. When total mass Mₐₗₗ varies as a result of a transport item or the like being loaded onto mover 18, total mass Mₐₗₗ is again calculated and input to first to tenth amplifiers 30a to 30j.

When a switching signal that determines that the coil is a power supply target is transmitted from switcher 36, switching processor 59 applies the torque instruction output from speed control unit 48 to current control unit 50. When a switching signal that determines that the coil is not a power supply target is transmitted from switcher 36, switching processor 59 applies torque instruction 0 to current control unit 50. Specifically, switching processor 59 includes switch 61, and when a switching signal that determines that the coil is a power supply target is received from switcher 36, switching processor 59 switches switch 61 to a state in which speed control unit 48 and current control unit 50 are connected (see D shown in FIG. 2), and applies the torque instruction output from speed control unit 48 to current control unit 50. On the other hand, when a switching signal that determines that the coil is not a power supply target is received from switcher 36, switching processor 59 switches switch 61 to a state in which speed control unit 48 and current control unit 50 are not connected (see E shown in FIG. 2), and applies torque instruction 0 to current control unit 50.

Current control unit 50 supplies power to the power supply target coil based on the generated torque instruction. For example, current control unit 50 sets a voltage value based on the received torque instruction, and supplies power to the power supply target coil based on the set voltage value. As a result, permanent magnet 24 moves in the arrangement direction by being pulled or pushed by the one or more power supply target coils.

Second to tenth amplifiers 30b to 30j have the same configuration as that of first amplifier 30a. Accordingly, the description of first amplifier 30a given above applies to second to tenth amplifiers 30b to 30j, and thus a detailed description of second to tenth amplifiers 30b to 30j is omitted.

Next, a description of an example of an operation performed by linear motor system 10 configured as described above will be given.

FIG. 3 is a flow diagram showing an example of an operation performed by controller 28 included in linear motor system 10 shown in FIG. 1A. FIG. 4 is a flow diagram showing an example of an operation performed by a power supply target amplifier included in linear motor system 10 shown in FIG. 1A. FIG. 5 is an illustrative diagram illustrating an example of an operation performed by linear motor system 10 shown in FIG. 1A, showing a state when the number of power supply target coils is one. FIG. 6 is a block diagram showing a functional configuration of linear motor system 10 in the state shown in FIG. 5. In FIG. 6, in order to avoid complex drawings, amplifiers other than a power supply target amplifier are not illustrated.

First, an example of an operation performed by controller 18 will be described with reference to FIGS. 3, 5, and 6.

As shown in FIG. 3, controller 28 selects one or more power supply target coils, and transmits, to switching processors 59 of first to tenth amplifiers 30a to 30j, a switching signal for determining whether the one or more power supply target coils are power supply targets (step S1). Specifically, controller 28 transmits a switching signal that determines that the selected one or more coils are power supply targets to switching processor 59 of one or more power supply target amplifiers, and transmits a switching signal that determines that the selected cone or more oils are not power supply targets to switching processors 59 of amplifiers other than the one or more power supply target amplifiers. In the state shown in FIG. 5, first position sensor 34a and second position sensor 34b that are disposed at opposite ends of first coil 20a in the arrangement direction both face permanent magnet 24 in the transverse direction and detect permanent magnet 24. Accordingly, controller 28 selects first coil 20a as a power supply target coil. In contrast, third position sensor 34c disposed at one end of second coil 20b in the arrangement direction faces permanent magnet 24 in the transverse direction, and detects permanent magnet 24, while fourth position sensor 34d disposed at the other end of second coil 20b in the arrangement direction does not face permanent magnet 24 in the transverse direction, and does not detect permanent magnet 24. Accordingly, controller 28 does not select second coil 20b as a power supply target coil. Also, fifth position sensor 34e and sixth position sensor 34f that are disposed at opposite ends of third coil 20c in the arrangement direction both do not face permanent magnet 24 in the transverse direction and do not detect permanent magnet 24. Accordingly, controller 28 does not select third coil 20c as a power supply target coil. As described above, in the state shown in FIG. 5, controller 28 selects first coil 20a as a power supply target coil, and first amplifier 30a corresponding to first coil 20a serves as a power supply target amplifier.

Next, controller 28 transmits an instruction to the one or more power supply target amplifiers that correspond to the one or more power supply target coils (step S2). In the state shown in FIG. 5, controller 28 transmits an instruction to first amplifier 30a.

Finally, controller 28 transmits the total number of one or more power supply target coils to the one or more power supply target amplifiers that correspond to the one or more power supply target coils (step S3). In the state shown in FIG. 5, controller 28 transmits the total number of one or more power supply target coils to first amplifier 30a. In the state shown in FIG. 5, the total number of one or more power supply target coils is one.

Next, an example of an operation performed by first amplifier 30a that serves as a power supply target amplifier will be described with reference to FIGS. 4, 5, and 6.

As shown in FIG. 4, first amplifier 30a acquires the total number of one or more power supply target coils (step S11). Specifically, first amplifier 30a acquires the total number of one or more power supply target coils based on information transmitted from controller 28.

Next, first amplifier 30a calculates post-division total mass Mₐₗₗ/n by dividing total mass Mₐₗₗ by total number n of one or more power supply target coils (step S12). In the state shown in FIG. 5, the total number of one or more power supply target coils is one. Accordingly, first amplifier 30a calculates post-division total mass Mₐₗₗ/1 by dividing total mass Mₐₗₗ by 1.

Finally, first amplifier 30a supplies power to first coil 20a that is the corresponding power supply target coil by using post-division total mass Mₐₗₗ/1 (step S13). As shown in FIG. 6, first amplifier 30a supplies power to first coil 20a by using post-division total mass Mₐₗₗ/1 that is the value obtained by dividing total mass Mₐₗₗ by 1.

As a result of power being supplied to first coil 20a, permanent magnet 24 is pulled or pushed by first coil 20a, and moves in the arrangement direction (see arrow C shown in FIG. 5). The flow direction of electric current supplied to first coil 20a is set according to the positions of the magnetic poles of permanent magnet 24. By inputting information such as the size of permanent magnet 24 and the positions of the magnetic poles of permanent magnet 24 to first amplifier 30a and the like in advance, first amplifier 30a determines the positions of the magnetic poles of permanent magnet 24 according to the position of permanent magnet 24, and sets the flow direction of electric current.

As shown in FIG. 5, while first coil 20a is serving as a power supply target coil, first amplifier 30a repeatedly performs the above-described operation.

FIG. 7 is an illustrative diagram illustrating an example of an operation performed by linear motor system 10 shown in FIG. 1A, showing a state when the number of power supply target coils is two. FIG. 8 is a block diagram showing a functional configuration of linear motor system 10 in the state shown in FIG. 7. In FIG. 8, in order to avoid complex drawings, amplifiers other than power supply target amplifiers are not illustrated. An example of an operation performed by controller 28 and power supply target amplifiers immediately after switching one or more power supply target coils will be described by also referring to FIGS. 7 and 8.

First, an example of an operation performed by controller 18 will be described with reference to FIGS. 3, 7, and 8.

As shown in FIG. 3, controller 28 selects one or more power supply target coils, and transmits, to switching processors 59 of first to tenth amplifiers 30a to 30j, a switching signal for determining whether the one or more power supply target coils are power supply targets (step S1). In the case where switching is performed from the state shown in FIG. 5 to the state shown in FIG. 7, fourth position sensor 34d on the forward side in the moving direction (see arrow C) of permanent magnet 24 detects the leading end of permanent magnet 24 as a result of fourth position sensor 34d facing the leading end of permanent magnet 24 in the transverse direction. Accordingly, controller 28 selects second coil 20b on which fourth position sensor 34d is disposed, as a new power supply target coil. As described above, in the state shown in FIG. 7, controller 28 selects first coil 20a and second coil 20b as power supply target coils, and first amplifier 30a corresponding to first coil 20a and second amplifier 30b corresponding to second coil 20b serve as power supply target amplifiers.

Next, when controller 28 has selected one or more power supply target coils, controller 28 transmits an instruction to one or more power supply target amplifiers that correspond to the selected one or more power supply target coils (step S2). In the state shown in FIG. 7, controller 28 transmits an instruction to first amplifier 30a and second amplifier 30b.

Finally, controller 28 transmits the total number of one or more power supply target coils to the one or more power supply target amplifiers that correspond to the selected one or more power supply target coils (step S3). In the state shown in FIG. 7, controller 28 transmits the total number of one or more power supply target coils to first amplifier 30a and second amplifier 30b. In the state shown in FIG. 7, the total number of one or more power supply target coils is two.

As described above, at the time when one or more power supply target coils are switched, controller 28 transmits the total number of one or more power supply target coils immediately after the switching to one or more power supply target amplifiers immediately after the switching.

Next, an example of an operation performed by first amplifier 30a and second amplifier 30b that serve as power supply target amplifiers will be described with reference to FIGS. 4, 7, and 8.

As shown in FIG. 4, first amplifier 30a acquires the total number of one or more power supply target coils (step S11). Specifically, first amplifier 30a acquires the total number of one or more power supply target coils based on information transmitted from controller 28.

Next, first amplifier 30a calculates post-division total mass Mₐₗₗ/n by dividing total mass Mₐₗₗ by total number n of one or more power supply target coils (step S12). In the state shown in FIG. 7, the total number of one or more power supply target coils is two. Accordingly first amplifier 30a calculates post-division total mass Mₐₗₗ/2 by dividing total mass Mₐₗₗ by 2.

Finally, first amplifier 30a supplies power to first coil 20a that is the corresponding power supply target coil by using post-division total mass Mₐₗₗ/2 (step S13). As shown in FIG. 8, first amplifier 30a supplies power to first coil 20a by using post-division total mass Mₐₗₗ/2 that is the value obtained by dividing total mass Mₐₗₗ by 2.

Second amplifier 30b also performs the same operation as that performed by first amplifier 30a, and supplies power to second coil 20b.

As a result of power being supplied to first coil 20a, permanent magnet 24 is pulled or pushed by first coil 20a, and moves in the arrangement direction (see arrow C shown in FIG. 3), and also as a result of power being supplied to second coil 20b, permanent magnet 24 is pulled or pushed by second coil 20b, and moves in the arrangement direction. The flow direction of electric current supplied to first coil 20a and the flow direction of electric current supplied to second coil 20b are set according to the positions of the magnetic poles of permanent magnet 24.

As shown in FIG. 7, while first coil 20a and second coil 20b are serving as power supply target coils, first amplifier 30a and second amplifier 30b repeatedly perform the above-described operation.

As described above, one or more power supply target amplifiers immediately after switching one or more power supply target coils calculate post-division total mass Mₐₗₗ/n by dividing total mass Mₐₗₗ by total number n of one or more power supply target coils immediately after the switching. Then, the one or more power supply target amplifiers immediately after the switching supply power to the one or more power supply target coils immediately after the switching by using calculated post-division total mass Mₐₗₗ/n.

FIG. 9 is an illustrative diagram illustrating an example of an operation performed by linear motor system 10 shown in FIG. 1A, showing a state when the number of power supply target coils is three. FIG. 10 is a block diagram showing a functional configuration of linear motor system 10 in the state shown in FIG. 9. In FIG. 9, in order to avoid complex drawings, amplifiers other than power supply target amplifiers are not illustrated. An example of an operation performed by controller 28 and power supply target amplifiers immediately after switching one or more power supply target coils will be described by also referring to FIGS. 9 and 10.

First, an example of an operation performed by controller 18 will be described with reference to FIGS. 3, 9, and 10.

As shown in FIG. 3, controller 28 selects one or more power supply target coils, and transmits, to switching processors 59 of first to tenth amplifiers 30a to 30j, a switching signal for determining whether the one or more power supply target coils are power supply targets (step S1). In the case where switching is performed from the state shown in FIG. 7 to the state shown in FIG. 9, sixth position sensor 34f on the forward side in the moving direction (see arrow C) of permanent magnet 24 detects the leading end of permanent magnet 24 as a result of sixth position sensor 34f facing the leading end of permanent magnet 24 in the transverse direction. Accordingly, controller 28 selects third coil 20c on which sixth position sensor 34f is disposed as a new power supply target coil. As described above, in the state shown in FIG. 9, controller 28 selects first coil 20a, second coil 20b, and third coil 20c as power supply target coils, and first amplifier 30a corresponding to first coil 20a, second amplifier 30b corresponding to second coil 20b, and third amplifier 30c corresponding to third coil 20c serve as power supply target amplifiers.

Next, when controller 28 has selected one or more power supply target coils, controller 28 transmits an instruction to one or more power supply target amplifiers that correspond to the selected one or more power supply target coils (step S2). In the state shown in FIG. 9, controller 28 transmits an instruction to first amplifier 30a, second amplifier 30b, and third amplifier 30c.

Finally, controller 28 transmits the total number of one or more power supply target coils to the one or more power supply target amplifiers that correspond to the one or more power supply target coils (step S3). In the state shown in FIG. 9, controller 28 transmits the total number of one or more power supply target coils to first amplifier 30a, second amplifier 30a, and third amplifier 30c. In the state shown in FIG. 9, the total number of one or more power supply target coils is three.

As described above, at the time when one or more power supply target coils are switched, controller 28 transmits the total number of one or more power supply target coils immediately after switching to the one or more power supply target amplifiers immediately after the switching.

Next, an example of an operation performed by first amplifier 30a, second amplifier 30b, and third amplifier 30c that serve as power supply target amplifiers will be described with reference to FIGS. 4, 9, and 10.

As shown in FIG. 4, first amplifier 30a acquires the total number of one or more power supply target coils (step S11). Specifically, first amplifier 30a acquires the total number of one or more power supply target coils based on information transmitted from controller 28.

Next, first amplifier 30a calculates post-division total mass Mₐₗₗ/n by dividing total mass Mₐₗₗ by total number n of one or more power supply target coils (step S12). In the state shown in FIG. 9, the total number of one or more power supply target coils is three. Accordingly, first amplifier 30a calculates post-division total mass Mₐₗₗ/3 by dividing total mass Mₐₗₗ by 3.

Finally, first amplifier 30a supplies power to first coil 20a that is the corresponding power supply target coil by using post-division total mass Mₐₗₗ/3 (step S13). As shown in FIG. 10, first amplifier 30a supplies power to first coil 20a by using post-division total mass Mₐₗₗ/3 that is the value obtained by dividing total mass Mₐₗₗ by 3.

Second amplifier 30b and third amplifier 30c also perform the same operation as that performed by first amplifier 30a, and supply power to second coil 20b and third coil 20c.

As a result of power being supplied to first coil 20a, permanent magnet 24 is pulled or pushed by first coil 20a, and moves in the arrangement direction (see arrow C shown in FIG. 3), and as a result of power being supplied to second coil 20b, permanent magnet 24 is pulled or pushed by second coil 20b, and moves in the arrangement direction, and also as a result of power being supplied to third coil 20c, permanent magnet 24 is pulled or pushed by third coil 20c, and moves in the arrangement direction. The flow direction of electric current supplied to first coil 20a, the flow direction of electric current supplied to second coil 20b, and the flow direction of electric current supplied to third coil 20c are set according to the positions of the magnetic poles of permanent magnet 24.

As shown in FIG. 9, while first coil 20a, second coil 20b, and third coil 20c are serving as power supply target coils, first amplifier 30a, second amplifier 30b, and third amplifier 30c repeatedly perform the above-described operation.

As described above, one or more power supply target amplifiers immediately after switching one or more power supply target coils calculate post-division total mass Mₐₗₗ/n by dividing total mass Mₐₗₗ by the total number of one or more power supply target coils immediately after the switching. Then, the one or more power supply target amplifiers immediately after the switching supply power to one or more power supply target coils immediately after the switching by using calculated post-division total mass Mₐₗₗ/n.

When mover 18 further moves, and first position sensor 34a on the rearward side in the moving direction of permanent magnet 24 in the arrangement direction faces the trailing end of permanent magnet 24 in the transverse direction and detects the trailing end of permanent magnet 24, controller 28 does not select first coil 20a on which first position sensor 34a is disposed, as a power supply target coil.

As described above, each time one or more power supply target coils are switched, controller 28 transmits the total number of one or more power supply target coils immediately after the switching to the one or more power supply target amplifiers immediately after the switching. In this way, controller 28 repeatedly transmits the total number of one or more power supply target coils. Also, each time one or more power supply target coils are switched, post-division total mass Mₐₗₗ/n is calculated, and power is supplied by using calculated post-division total mass Mₐₗₗ/n. As described above, post-division total mass Mₐₗₗ/n is repeatedly calculated, and power is supplied by using calculated post-division total mass Mₐₗₗ/n.

As described above, one or more power supply target amplifiers supply power to one or more power supply target coils by using post-division total mass Mₐₗₗ/n obtained by dividing total mass Mₐₗₗ by the total number of one or more power supply target coils. As a result, the thrust applied to mover 18 can be equalized before and after switching. With this configuration, the switching shock can be reduced.

With linear motor system 10 as described above, speed control unit 48 calculates post-division total mass Mₐₗₗ/n by dividing total mass Mₐₗₗ by the total number of one or more power supply target coils. Then, speed control unit 48 generates a torque instruction by using calculated post-division total mass Mₐₗₗ/n, and current control unit 50 supplies power to one or more power supply target coils based on the generated torque instruction. Accordingly, even when the total number of one or more power supply target coils varies before and after switching one or more power supply target coils, by equally dividing total mass Mₐₗₗ, it is possible to supply power to the one or more power supply target coils immediately after the switching. As a result, it is possible to suppress sharp variation in thrust applied to the mover at the time of the switching, and thus reduce the switching shock that occurs when one or more power supply target coils are switched.

Also, acquirer 40 transmits the total number of one or more power supply target coils to one or more power supply target amplifiers, and speed control unit 48 of each of the one or more power supply target amplifiers generates a torque instruction by using post-division total mass Mₐₗₗ/n, and current control unit 50 of each of the one or more power supply target amplifiers supplies power to a corresponding one of the one or more power supply target coils based on the torque instruction. As described above, each of one or more power supply target amplifiers can supply power by using post-division total mass Mₐₗₗ/n obtained by equally dividing total mass Mₐₗₗ. As a result, it is possible to suppress sharp variation in thrust applied to the mover at the time of switching the one or more power supply target coils, and thus reduce the switching shock that occurs when the one or more power supply target coils are switched.

Also, control device 14 further includes controller 28 capable of communicating with first to tenth amplifiers 30a to 30j, and controller 28 includes acquirer 40. As described above, controller 28 is capable of communicating with first to tenth amplifiers 30a to 30j, and thus can easily transmit the total number of one or more power supply target coils to first to tenth amplifiers 30a to 30j.

Also, first to twentieth position sensors disposed at opposite ends of each of first to tenth coils 20a to 20j in the arrangement direction are further included. Switcher 36 is configured such that, when the position sensor on the forward side in the moving direction of permanent magnet 24 in the arrangement direction in each of first to tenth coils 20a to 20j detects the leading end of permanent magnet 24, switcher 36 selects a coil on which the position sensor is disposed, as a power supply target coil, and when the position sensor on the rearward side in the moving direction of permanent magnet 24 in the arrangement direction detects the trailing end of permanent magnet 24, switcher 36 does not select a coil on which the position sensor is disposed, as a power supply target coil. With this configuration, switcher 36 can easily switch the power supply target coil.

### [Embodiment 2]

Next, a description of Embodiment 2 will be given. Embodiment 2 is different from Embodiment 1 mainly in that each of first to tenth amplifiers includes acquirer 40. The following description will be given focusing mainly on differences from Embodiment 1.

FIG. 11 is a block diagram showing a functional configuration of linear motor system 10a according to Embodiment 2. As shown in FIG. 11, linear motor system 10a according to Embodiment 2 includes controller 28a and first to third amplifiers 60a to 60c. Although not illustrated, linear motor system 10a also includes fourth to tenth amplifiers.

Controller 28a is different from controller 28 in that controller 28a does not include acquirer 40.

First amplifier 60a is different from first amplifier 30a in that first amplifier 60a includes acquirer 40. Acquirer 40 is connected to position detection device 15. Acquirer 40 recognizes one or more power supply target coils by using the same method as that used by switcher 36, and acquires the total number of one or more power supply target coils. Second amplifier 60b and third amplifier 60c have the same configuration as that of first amplifier 60a. Also, the fourth to tenth amplifiers included in linear motor system 10a also have the same configuration as that of first amplifier 60a. In linear motor system 10a, first amplifier 60a, second amplifier 60b, third amplifier 60c, and the fourth to tenth amplifiers are capable of communicating with each other.

Each of one or more power supply target amplifiers acquires the total number of one or more power supply target coils based on information transmitted from position detection device 15, calculates post-division total mass Mₐₗₗ/n, and supplies power by using post-division total mass Mₐₗₗ/n.

For example, any one of first to third amplifiers 60a to 60c and the fourth to tenth amplifiers may acquire the total number of one or more power supply target coils, and transmit the acquired total number of one or more power supply target coils to one or more power supply target amplifiers.

With linear motor system 10a as described above, first to third amplifiers 60a to 60c and the fourth to tenth amplifiers are capable of communicating with each other, and each of first to third amplifiers 60a to 60c and the fourth to tenth amplifiers includes acquirer 40. Accordingly, first to third amplifiers 60a to 60c and the fourth to tenth amplifiers can acquire the total number of one or more power supply target coils without using controller 28a.

### (Supplementary Description)

Up to here, Embodiment 1 and Embodiment 2 have been described as examples of the technique disclosed in the present application. However, the technique disclosed in the present application is not limited thereto, and is also applicable to embodiments and variations obtained by making modifications, replacements, additions, omissions, and the like as appropriate without departing from the scope of the present disclosure.

For example, in the embodiments given above, an example has been described in which each of the first to tenth amplifiers includes parameter setter 57. However, the configuration is not limited thereto. For example, the controller may include parameter setter 57.

Also, for example, in the embodiments given above, an example has been described in which linear motor system 10a includes controller 28a. However, the configuration is not limited thereto. For example, the linear motor system may not include a controller. In this case, each of the first to tenth amplifiers may include an instructor and a switcher.

In the foregoing description, switcher 36 is configured to select one or more coils from among a plurality of coils as one or more power supply target coils that serve as power supply targets, the one or more coils each including an entire region extending across opposite ends in the arrangement direction that faces permanent magnet 24. However, the configuration is not limited thereto. For example, in FIG. 1A, the entire region extending across opposite ends of second coil 20b faces permanent magnet 24 when viewed from the transverse direction. However, for example, even when second coil 20b does not partially face permanent magnet 24 when viewed from the transverse direction, as long as opposite ends of second coil 20b in the arrangement direction (X direction) face permanent magnet 24, second coil 20b may be selected as a power supply target coil.

### [Industrial Applicability]

The linear motor system according to the present disclosure is widely applicable to a transportation device and the like.

### [Reference Signs List]

- 10, 10a: linear motor system
- 12: linear motor
- 14: control device
- 15: position detection device
- 16: stator
- 18: mover
- 20a: first coil
- 20b: second coil
- 20c: third coil
- 20d: fourth coil
- 20e: fifth coil
- 20f: sixth coil
- 20g: seventh coil
- 20h: eighth coil
- 20i: ninth coil
- 20j: tenth coil
- 22: base
- 24: permanent magnet
- 26: carrier
- 27: transport item
- 28, 28a: controller
- 30a: first amplifier
- 30b: second amplifier
- 30c: third amplifier
- 30d: fourth amplifier
- 30e: fifth amplifier
- 30f: sixth amplifier
- 30g: seventh amplifier
- 30h: eighth amplifier
- 30i: ninth amplifier
- 30j: tenth amplifier
- 34a: first position sensor
- 34b: second position sensor
- 34c: third position sensor
- 34d: fourth position sensor
- 34e: fifth position sensor
- 34f: sixth position sensor
- 34g: seventh position sensor
- 34h: eighth position sensor
- 34i: ninth position sensor
- 34j: tenth position sensor
- 34k: eleventh position sensor
- 341: twelfth position sensor
- 34m: thirteenth position sensor
- 34n: fourteenth position sensor
- 34o: fifteenth position sensor
- 34p: sixteenth position sensor
- 34q: seventeenth position sensor
- 34r: eighteenth position sensor
- 34s: nineteenth position sensor
- 34t: twentieth position sensor
- 36: switcher
- 38: instructor
- 40: acquirer
- 42: deviation calculator
- 44: position control unit
- 46: deviation calculation unit
- 48: speed control unit
- 50: current control unit
- 52, 54: integrator
- 55: adder
- 57: parameter setter
- 59: switching processor
- 60a: first amplifier
- 60b: second amplifier
- 60c: third amplifier
- 61: switch

## Claims

1. A linear motor system comprising:
a stator including a plurality of coils that are arranged in a line;
a mover including a permanent magnet disposed opposite to the plurality of coils;
a switcher that performs: (i) selecting, from among the plurality of coils, one or more coils each including a region that extends across opposite ends in an arrangement direction and faces the permanent magnet as one or more power supply target coils that serve as power supply targets; and (ii) switching the one or more power supply target coils in response to a movement of the permanent magnet; and
a control device that supplies power to the one or more power supply target coils by using a total mass calculated based on a mass of the permanent magnet,
wherein the control device includes:
an acquirer that acquires a total number of the one or more power supply target coils;
a speed control unit that calculates a post-division total mass by dividing the total mass by the total number of the one or more power supply target coils, and generates a torque instruction by using the post-division total mass; and
a current control unit that supplies power to the one or more power supply target coils based on the torque instruction generated by the speed control unit.

2. The linear motor system according to claim 1,
wherein the control device includes a plurality of control units that are provided in one-to-one correspondence with the plurality of coils,
each of the plurality of control units includes the speed control unit and the current control unit,
the acquirer transmits the total number of the one or more power supply target coils to one or more power supply target control units that are one or more control units, out of the plurality of control units, that correspond to the one or more power supply target coils, and
the speed control unit of each of the one or more power supply target control units generates the torque instruction by using the post-division total mass, and the current control unit of each of the one or more power supply target control units supplies power to a corresponding one of the one or more power supply target coils based on the torque instruction.

3. The linear motor system according to claim 2,
wherein the control device further includes a superordinate control unit capable of communicating with the plurality of control units, and
the superordinate control unit includes the acquirer.

4. The linear motor system according to claim 2,
wherein the plurality of control units are capable of communicating with each other, and
each of the plurality of control units includes the acquirer.

5. The linear motor system according to any one of claims 1 to 4, further comprising a plurality of position detectors provided at opposite ends of each of the plurality of coils in the arrangement direction,
wherein, in each of the plurality of coils,
when one of the position detectors that is provided on a forward side in a moving direction of the permanent magnet in the arrangement direction detects a leading end of the permanent magnet, the switcher selects the coil on which the position detector is disposed as one of the one or more power supply target coils, and
when another one of the position detectors that is provided on a rearward side in the moving direction of the permanent magnet in the arrangement direction detects a trailing end of the permanent magnet, the switcher does not select the coil on which the position detector is disposed as the one of the one or more power supply target coils.

6. The linear motor system according to any one of claims 1 to 5,
wherein the total mass is a sum of a mass of the permanent magnet, a mass of a transport item, and a mass of a carrier on which the transport item is placed and that is attached to the permanent magnet.
